# EUROPEAN PATENT APPLICATION

(11) **EP 2 597 621 A1**
(43) Date of publication of application: **29.05.2013**
(21) Application number: 10855017.9
(22) Date of filing: 22.07.2010
(51) Int. Cl.: G06T 19/00, G06T 1/00

(54) **AUGMENTED REALITY DEVICE AND METHOD OF CONTROLLING THE SAME**

(71) Applicant: Pioneer Corporation, Kawasaki-shi, Kanagawa 212-0031 (JP)
(72) Inventor: GOTODA, Akira, Kawasaki-shi Kanagawa 212-0031 (JP)
(74) Representative: Viering, Jentschura & Partner
(86) International application number: PCT/JP2010/062342
(87) International publication number: WO 2012/011180

(57) **Abstract**

An augmented reality apparatus is provided with: an imaging device (110) for taking an image; a translucent marker (200) having transparency; a detecting device (120) for detecting the translucent marker in the image; a synthesizing device (160) for performing synthesis processing on the basis of the translucent marker in the image; and a removing device (150) for removing the translucent marker from the image by using transmittance of the translucent marker. According to the augmented reality apparatus as described above, the marker can be preferably removed, and it is thus possible to realize extremely high-quality augmented reality.

## Description

### Technical Field

The present invention relates to, for example, an augmented reality apparatus for synthesizing a computer graphic (CG) or the like on the basis of a marker in an image taken, and a control method thereof.

### Background Art

As this type of apparatus, for example, there is an apparatus for realizing augmented reality (AR) by detecting a marker in an image taken by a video camera, a WEB camera, or the like and by synthesizing a CG or the like at a position at which the marker is detected. The marker in the apparatus is used as a basis of the synthesis processing. It is thus not preferable that the marker is shown in the image together with the synthesized CG.

Thus, for example, Patent document 1 suggests a technology of removing the marker from the image after the synthesis, by overwriting the image taken in a condition that the marker is not provided, upon the synthesis. Moreover, Patent document 2 suggests a technology of using a marker for reflecting or absorbing infrared rays so that people cannot see.

### Prior Art Document

### Patent Document

Patent document 1: Japanese Patent No. 3530772
Patent document 2: Japanese Patent Application Laid Open No. 2007-163367

### Disclosure of Invention

### Subject to be Solved by the Invention

In the technology related to the Patent document 1, however, the imaging needs to be performed in advance in the condition that the marker is not provided, and it is premised that a position and a background of the marker are known in advance. Moreover, there is no problem if the background of the marker is flat, but if the background has a space, then, an appropriate response is difficult.

Moreover, in the technology related to the Patent document 2, an infrared imaging unit for detecting the marker is required, apart from an imaging unit for taking a RGB image. Furthermore, signal processing for providing a matching positional relation between the RGB image and an infrared image, or a configuration of wavelength division using an infrared mirror or the like is required, and an equipment size thus increases.

In view of the aforementioned problems, it is therefore an object of the present invention to provide an augmented reality apparatus capable of preferably removing the marker in a simple configuration, and a method of controlling the augmented reality apparatus.

### Means for Solving the Subject

The above object of the present invention can be achieved by an augmented reality apparatus provide with: an imaging device for taking an image; a translucent marker having transparency; a detecting device for detecting said translucent marker in the image; a synthesizing device for performing synthesis processing on the basis of said translucent marker in the image; and a removing device for removing said translucent marker from the image by using transmittance of said translucent marker.

The above object of the present invention can be achieved by a method of controlling an augmented reality apparatus comprising a translucent marker having transparency, said method provide with: an imaging process of taking an image; a detecting process of detecting said translucent marker in the image; a synthesizing process of performing synthesis processing on the basis of said translucent marker in the image; and a removing process of removing said translucent marker from the image by using transmittance of said translucent marker.

The operation and other advantages of the present invention will become more apparent from an embodiment explained below.

### Brief Description of Drawings

[FIG. 1] FIG. 1 is a block diagram illustrating an entire configuration of an augmented reality apparatus in an example.
[FIG. 2] FIG. 2 is a plan view (1) illustrating a configuration of a translucent marker.
[FIG. 3] FIG. 3 is a plan view (2) illustrating a configuration of the translucent marker.
[FIG. 4] FIG. 4 is a flowchart illustrating operation of the augmented reality apparatus in the example.
[FIG. 5] FIG. 5 is a plan view illustrating one example of a previous image.
[FIG. 6] FIG. 6 is a plan view illustrating one example of a taken image.
[FIG. 7] FIG. 7 is a plan view illustrating one example of a divided image.
[FIG. 8] FIGs. 8 are graphs (1) illustrating light intensity detected in imaging, together with a color-matching function and spectral transmittance.
[FIG. 9] FIGs. 9 are graphs (2) illustrating the light intensity detected in the imaging, together with the color-matching function and the spectral transmittance.
[FIG. 10] FIGs. 10 are graphs illustrating an image signal before correction and an image signal after correction, together with a correction amount.
[FIG. 11] FIG. 11 is a plan view illustrating a CG synthesized image together with a translucent marker 200.
[FIG. 12] FIG. 12 is a plan view illustrating the CG synthesized image displayed.
[FIG. 13] FIG. 13 is a plan view illustrating an image obtained by synthesizing the CG image on the front side of the translucent marker.
[FIG. 14] FIG. 14 is a plan view illustrating an image obtained by synthesizing the CG image on the rear side of the translucent marker.

### Mode for Carrying Out the Invention

The above object according to a first embodiment can be achieved by an augmented reality apparatus provide with: an imaging device for taking an image; a translucent marker having transparency; a detecting device for detecting said translucent marker in the image; a synthesizing device for performing synthesis processing on the basis of said translucent marker in the image; and a removing device for removing said translucent marker from the image by using transmittance of said translucent marker.

In the augmented reality apparatus in this embodiment, in operation thereof, an image is taken by the imaging device, such as, for example, a video camera and a WEB camera. If the image is taken, the translucent marker in the image is detected by the detecting device. Here, in particular, the translucent marker has the transparency and is configured such that a background can be seen through the translucent marker. The transmittance is set as two different values, which are, for example, 25% and 100%, and the difference in the transmittance is used to detect the marker. Moreover, the transmittance may be also set as three types of values, which are 25%, 50%, and 100%. In other words, the transmittance can be set as a plurality of values. Incidentally, the transmittance of the translucent marker is set, as occasion demands, in accordance with an imaging environment, an application, or the like. In other words, there is no limitation in the transmittance of the translucent marker and the type of the transmittance. The transmittance is set as a value in which the mixture of the marker with the background does not make it difficult to detect the marker.

If the marker is detected, then, the synthesis processing, for example, for CG or the like is performed by the synthesizing device. More specifically, for example, an object by the CG is synthesized at a position at which the marker is detected. At this time, a direction of the object may be determined in accordance with a direction of the marker. According to the synthesis processing, it is possible to realize such augmented reality that the object which does not exist in reality looks as if the object existed in the taken image.

Here, in the embodiment, in particular, the translucent marker in the image is removed by the removing device. To remove the translucent marker, the transmittance of the translucent marker is used. Specifically, an attenuation value of the image due to the presence of the translucent marker is derived from the transmittance, and the cancelation of the attenuation enables the translucent marker to be removed. Incidentally, the transmittance of the translucent marker is typically stored in the apparatus as known transmittance. There may be also provided a calculating device for calculating the transmittance of the translucent marker from the image.

If the translucent marker is removed, the presence thereof cannot be seen in the image even if the translucent marker exists in reality. It is thus possible to realize higher-quality augmented reality. Incidentally, such an effect can be demonstrated not only in cases where the translucent marker cannot be seen at all, but also in cases where the translucent marker is hardly seen. Thus, the translucent marker does not always have to be completely removed, but may be partially removed, or may be faded as a whole.

Here, a case where the marker does not have the transparency is considered. In this case, the background of the marker in the image is completely hidden by the marker. Thus, unless the background of the marker is stored in advance, the background of the marker cannot be restored. In other words, the marker in the image cannot be removed.

In the embodiment, however, in particular, as described above, the marker is configured as the translucent marker having the transparency. Therefore, it is possible to remove only the translucent marker from the image by using the transmittance. Therefore, without making a user aware of the presence of the marker, the CG can be synthesized, extremely preferably.

Incidentally, the processing for removing the translucent marker may be performed before or after the synthesis processing performed by the synthesizing device. Incidentally, the removal processing may be performed in any timing if the processing is after the detection of the translucent marker.

As explained above, according to the augmented reality apparatus in the embodiment, the use of the translucent marker enables the marker to be preferably removed from the image after the synthesis. Therefore, it is possible to realize extremely high-quality augmented reality.

In one aspect of the light detecting apparatus in the first embodiment, the augmented reality apparatus according to claim 1, characterized in that said translucent marker has a shape which enables inversion of two sides to be distinguished.

According to this aspect, it is possible to determine whether the translucent marker is faced up or down, and thus, the synthesis processing according to the direction of the translucent marker can be performed. For example, it is possible to perform such processing that in the case of the face-up, the CG to be synthesized is displayed three-dimensionally on the front side of the translucent marker, and that in the case of the face-down, the CG to be synthesized is displayed on three-dimensionally on the rear side.

In the embodiment, since the marker is translucent, the imaging from the rear side can be performed. Thus, if the inversion of the two sides can be distinguished, it is possible to effectively use such an advantage that the imaging can be performed from the rear side. For example, even if the CG is synthesized on the rear side of the translucent marker, it is possible to avoid such problems that the CG is hidden by the marker and that a positional relation between the CG and the marker becomes unnatural.

In another aspect of the light detecting apparatus in the first embodiment, the augmented reality apparatus according to claim 1, characterized in that said augmented reality apparatus further comprises a transmittance storing device for string the transmittance of said translucent marker.

According to this aspect, since the transmittance of the translucent marker is known, the removal of the translucent marker can be performed, more easily and certainly. Incidentally, the transmittance storing device may be configured not as a transmittance database for storing the transmittance of one translucent marker but as a transmittance database for storing the transmittance of each of a plurality of types of translucent markers.

In another aspect of the light detecting apparatus in the first embodiment, the augmented reality apparatus according to claim 1, characterized in that said translucent marker has a reflection-reducing filter.

According to this aspect, the reflection-reducing filter can reduce light reflection caused by the translucent marker. Thus, it is possible to reduce an influence of a reflection component in the processing for removing the translucent marker. Therefore, the translucent marker can be removed, more preferably.

Incidentally, as a specific example of the reflection-reducing filter, there are listed, for example, an anti-glare filter, an anti-reflection filter, and the like.

In another aspect of the light detecting apparatus in the first embodiment, the augmented reality apparatus according to claim 1, characterized in that said translucent marker has constant spectral transmittance in a visible light region.

According to this aspect, it is possible to prevent an attenuation factor of a RGB signal from changing due to wavelength characteristics of observed light (i.e. light irradiated on the translucent marker). Thus, the translucent marker can be removed with certainty, by using the transmittance.

The RGB signal is obtained, for example, by multiplying intensity of the observed light by a color-matching function r(λ), g(λ), b(λ), or the like and by integrating it. Thus, even observed lights having different wavelength characteristics are likely treated as identical light as the RGB signal.

Here, it is assumed that lights detected as the same light despite having the different wavelength characteristics as described above are observed through a filter having characteristics of spectral transmittance. In other words, it is assumed that the lights are observed via the translucent marker. In this case, if the spectral transmittance is not constant, the attenuation factor of the RGB signal likely varies due to the wavelength characteristics of the observed light. In other words, if the wavelength characteristics of the observed light are unknown, the translucent marker cannot be appropriately removed unless the spectral transmittance is constant.

In this aspect, however, the translucent marker is configured such that the spectral transmittance is constant in the visible-light region. Thus, even if the wavelength characteristics of the observed light are unknown, the removal processing can be performed with certainty. Incidentally, even if the spectral transmittance is not completely constant, if the spectral transmittance is close to constant, then, the effect described above can be obtained correspondingly.

In another aspect of the light detecting apparatus in the first embodiment, the augmented reality apparatus according to claim 1, characterized in that said removing device has: a correction amount generating device for generating a correction amount for removing said translucent marker; and an adjusting device for adjusting a position of an edge of the correction amount in accordance with a brightness edge of said translucent marker in the image.

According to this aspect, when the translucent marker is removed, the correction amount based on the attenuation by the translucent marker is firstly generated. In other words, the correction amount for canceling the attenuation is generated.

If the correction amount is generated, the positions of the brightness edge of the translucent marker (i.e. the brightness edge caused by the presence of the translucent marker) and the edge of the correction amount (an end or edge portion of the correction amount) are adjusted to match each other.

The adjustment as described above can prevent that one portion of the translucent marker cannot be removed and remains because the positions of the brightness edge of the translucent marker and the edge of the correction amount are shifted from each other. Therefore, the removal of the translucent marker can be performed, more preferably.

In another aspect of the light detecting apparatus in the first embodiment, the augmented reality apparatus according to claim 1, characterized in that said removing device has: a peak detecting device for detecting a brightness peak in an area in which there is a brightness edge of said translucent marker in the image in which said translucent marker is removed; and a peak correcting device for performing correction to reduce the brightness peak.

According to this aspect, after the translucent marker is removed once, the brightness peak in the area in which there is the brightness edge of the translucent marker (i.e. around the edge of the translucent marker) is detected. In other words, a portion in which the brightness locally projects is detected.

The brightness peak is supposedly caused by a partial residue of the translucent marker due to incomplete removal processing. Thus, if the brightness peak is detected, the processing for reducing the brightness peak is performed (preferably, processing for completely eliminating the brightness peak is performed). This makes it possible to remove the translucent marker which cannot be removed by one time of the correction, more certainly.

In another aspect of the light detecting apparatus in the first embodiment, the augmented reality apparatus according to claim 1, characterized in that said detecting device detects said translucent marker on the basis of a brightness edge in the image.

According to this aspect, the translucent marker is detected on the basis of the brightness edge in the image (i.e. a portion in which the brightness significantly changes). More specifically, the portion which is the brightness edge is detected as a contour portion of the translucent marker. By virtue of such a configuration, the translucent marker can be detected in a relatively simple manner and with certainty.

In another aspect of the light detecting apparatus in the first embodiment, the augmented reality apparatus according to claim 1, characterized in that said detecting device detects said translucent marker on the basis of a divided image obtained from a previous image which does not show said translucent marker and a taken image which shows said translucent marker.

According to this aspect, firstly, the previous image is taken in a condition that the translucent marker is not provided. In other words, the image which does not show the translucent marker is taken in advance. Then, when the translucent marker is detected, division processing using the previous image is performed on the taken image which shows the translucent marker, by which the divided image is generated.

In the divided image, a portion in which the translucent marker does not exist has a value of "1", and a portion in which the translucent marker exists has a value which decreases due to the attenuation according to the transmittance. In other words, the portion in which the translucent marker exists and the portion in which the translucent marker does not exist have values different from each other. Thus, by using the difference in the value in the divided image as described above, the translucent marker can be detected, in a relatively simple manner and with certainty.

Moreover, the division processing in generating the divided image can use not only the previous image described above but also a marker-removed image one frame or several frames before (i.e. an image on which the removal processing for the translucent marker is performed). Even in this case, as in the case of using the previous image, the translucent marker can be detected with certainty. Incidentally, in a case where the image moves (i.e. in a case where an imaging range changes), the image is desirably used for the division processing after various conversion processing are performed on the image in accordance with an amount of a pan, a zoom, or the like.

In another aspect of the light detecting apparatus in the first embodiment, the augmented reality apparatus according to claim 1, characterized in that said augmented reality apparatus further comprises at least one signal-wavelength light source.

According to this aspect, the translucent marker is irradiated with light from the single-wavelength light source. Thus, the wavelength characteristics of the observed light can be set to be known. Therefore, the translucent marker can be removed with certainty by using the transmittance. A plurality of light sources may be used if the light sources irradiate single-wavelength light. In other words, a plurality of lights may be irradiated as long as the wavelength characteristics thereof are known.

In another aspect of the light detecting apparatus in the first embodiment, the augmented reality apparatus according to claim 1, characterized in that said translucent marker has the transmittance which can be changed.

According to this aspect, for example, the translucent marker includes a liquid crystal or the like, and the transmittance can be changed. Thus, the translucent marker can be adjusted to have a value suitable for the background. Moreover, a portion in which the transmittance changes can be detected as the marker, and the removal processing can be performed while changing the transmittance.

The above object according to the first embodiment can be also achieved by a method of controlling an augmented reality apparatus comprising a translucent marker having transparency, said method provide with: an imaging process of taking an image; a detecting process of detecting said translucent marker in the image; a synthesizing process of performing synthesis processing on the basis of said translucent marker in the image; and a removing process of removing said translucent marker from the image by using transmittance of said translucent marker.

According to the method of controlling the augmented reality apparatus in the embodiment, it is possible to preferably control the augmented reality apparatus provided with the translucent marker. Therefore, as in the augmented reality apparatus in the embodiment described above, it is possible to preferably remove the marker from the image after the synthesis. Therefore, it is possible to realize extremely high-quality augmented reality.

Incidentally, even in the method of controlling the augmented reality apparatus in the embodiment, it is possible to adopt the same various aspects as those of the augmented reality apparatus in the embodiment described above.

The operation and other advantages of various embodiments associated with the augmented reality apparatus and the method of controlling the augmented reality apparatus of the present invention will be explained in more detail in an example described below.

### Example

Hereinafter, with reference to the drawings, an example of the present invention will be explained in detail.

### <Apparatus Configuration>

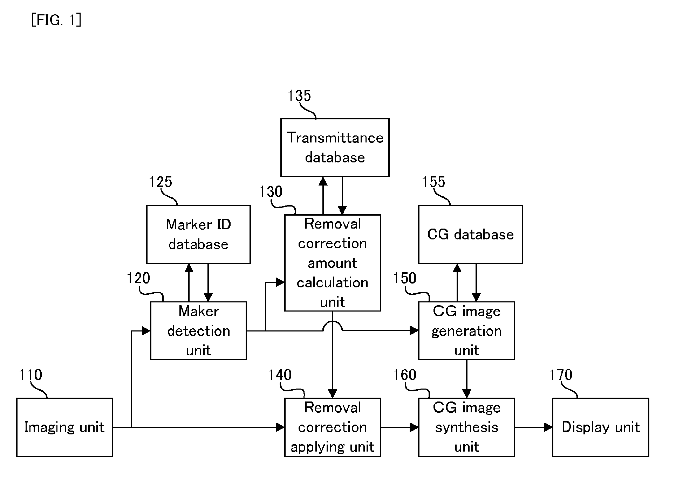

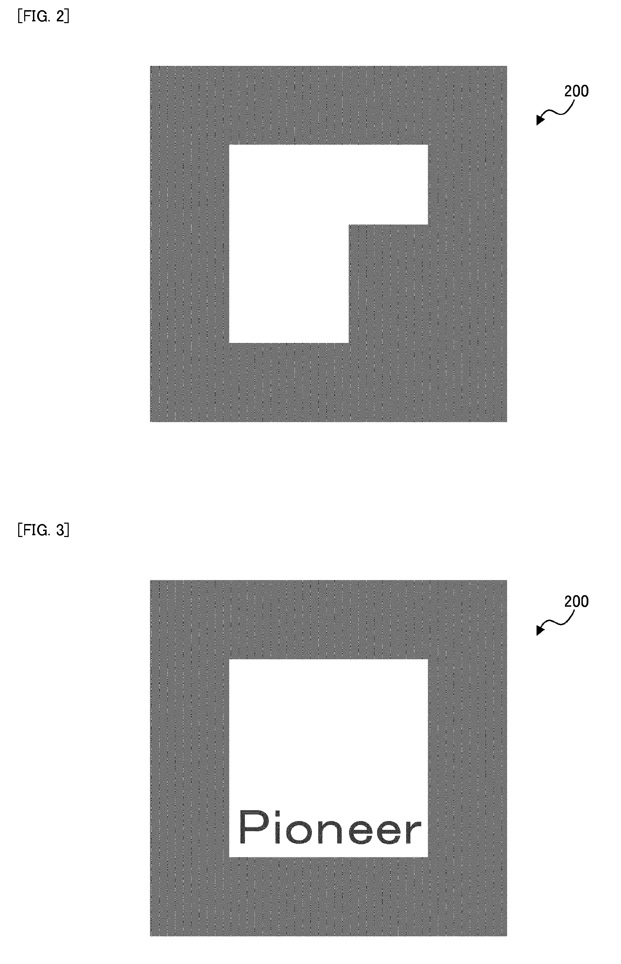

Firstly, a configuration of an augmented reality apparatus in an example will be explained with reference to FIG. 1 to FIG. 3. FIG. 1 is a block diagram illustrating an entire configuration of the augmented reality apparatus in the example. Each of FIG. 2 and FIG. 3 is a plan view illustrating a configuration of a translucent marker.

In FIG. 1, the augmented reality apparatus in the example is provided with an imaging unit 110, a marker detection unit 120, a marker id database 125, a removal correction amount calculation unit 130, a removal correction applying unit 140, a CG image generation unit 150, a CG database 155, a CG image synthesis unit 160, and a display unit 170.

The imaging unit 110 is one example of the "imaging device" of the present invention and is configured to take an image. The imaging unit 110 is, for example, a video camera, a WEB camera, or the like.

The marker detection unit 120 is one example of the "detecting device" of the present invention and is configured to detect the translucent marker from the image taken by the imaging unit 110. The marker detection unit 120 obtains position information and posture information about the translucent marker. The marker detection unit 120 also determines a type of the translucent marker by comparing it with a marker ID stored in the marker ID database 125. In the marker ID database, the shape and type of the marker are stored in association with each other in advance.

In FIG. 2 and FIG. 3, a translucent marker 200 in the example has transparency. In other words, the translucent marker 200 is configured such that at least a background can be seen through the translucent marker 200. Moreover, the translucent marker 200 has two sides which can be distinguished (more specifically, which have different shapes with respect to a particular rotation angle). By this, a direction of the translucent marker 200 can be detected with certainty.

Incidentally, the translucent marker 200 is provided with a reflection-reducing filter, such as, for example, an anti-glare filter and an anti-reflection filter, which is not illustrated here. According to the reflection-reducing filter, it can reduce light reflection caused by the translucent marker.

Moreover, the translucent marker 200 may be configured such that transmittance can be changed by including, for example, a liquid crystal or the like.

Back in FIG. 1, the removal correction amount calculation unit 130 is one example of the "correction amount generating device" of the present invention and calculates a correction amount for removing the translucent marker 200 from the image on the basis of the transmittance of the translucent marker 200 stored in a transmittance database 135. In the transmittance database 135, transmittance according to the type of the translucent marker is stored in advance.

Incidentally, instead of the transmittance database 135, a calculation unit for calculating the transmittance of the translucent marker 200 from the image may be provided. In this case, the removal correction amount calculation unit 130 calculates the correction amount on the basis of the calculated transmittance.

The removal correction applying unit 140 is one example of the "removing device" of the present invention and removes the translucent marker 200 from the image by applying the correction amount, which is calculated on the removal correction amount calculation unit 130, to the image.

The CG image generation unit 150 generates a CG image to be synthesized, in accordance with the type of the translucent marker 200 detected. The CG image generation unit 150 generates the CG image on the basis of information stored in the CG database 155. In the CG database 155, for example, the type of the translucent marker 200 is stored in association with the CG image.

The CG image synthesis unit 160 is one example of the "synthesizing device" of the present invention and synthesizes the CG image at a position at which the translucent marker 200 is detected. Incidentally, the synthesis of the CG image may be performed before the removal of the translucent marker 200. In other words, the CG image synthesis unit 160 may be provided at an earlier place of the removal correction applying unit 140.

The display unit 170 is provided, for example, with a monitor or the like, and displays an image in which the CG image is synthesized. Incidentally, since the translucent marker 200 in the image is removed on the removal correction applying unit 140, the translucent marker 200 does not exist in an output image, and there are only the background and the synthesized CG image.

### <Operation of Apparatus>

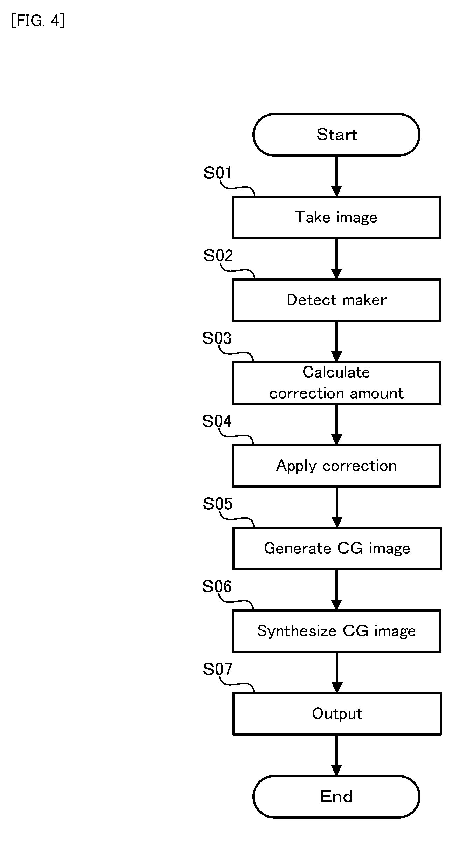

Next, operation of the augmented reality in the example will be explained with reference to FIG. 4 to FIG. 14. FIG. 4 is a flowchart illustrating the operation of the augmented reality apparatus in the example.

In FIG. 4, in operation of the augmented reality in the example, firstly, an image is taken by the imaging unit 110 (step S01). Data of the taken image is transmitted to the marker detection unit 120, and the translucent marker 200 in the image is detected (step S02). The detection of the translucent marker 200 is performed by using, for example, a brightness edge of the image. In other words, a predetermined brightness edge is detected as a contour of the translucent marker 200. Alternatively, if an imaging range is fixed, the detection of the translucent marker 200 may be performed by using a divided image.

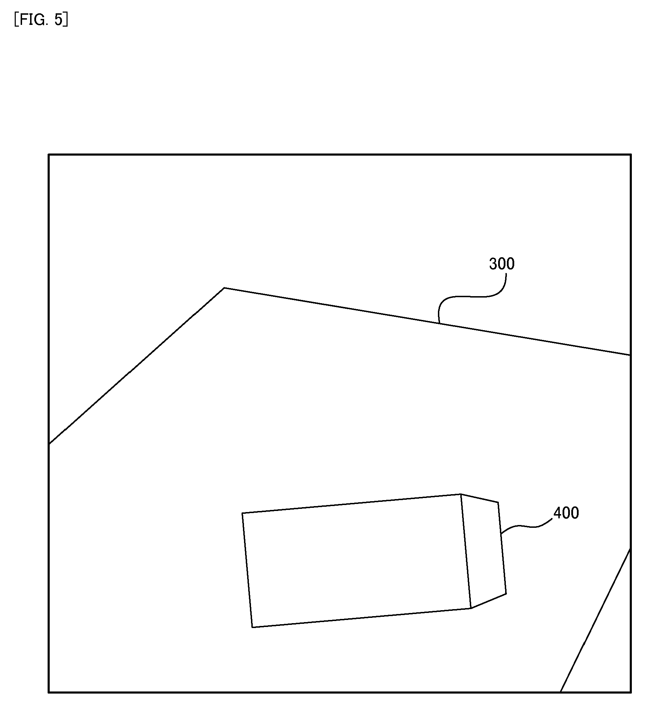

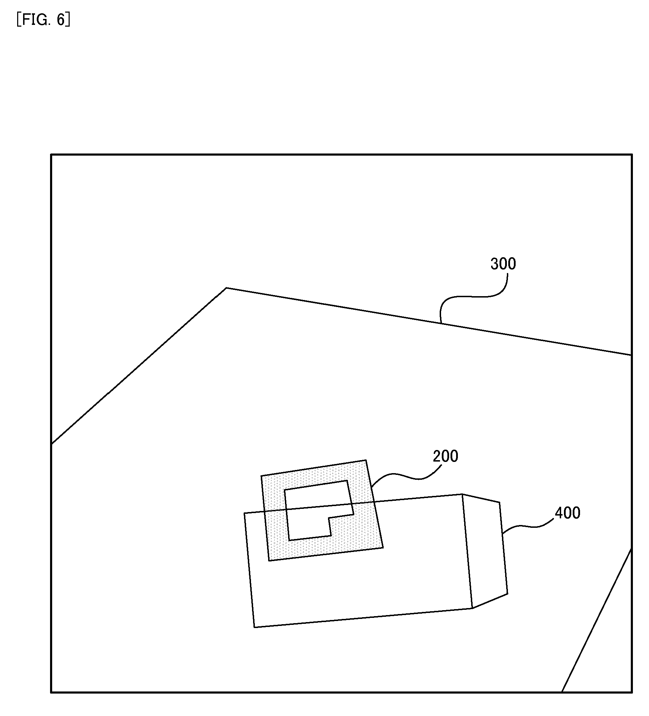

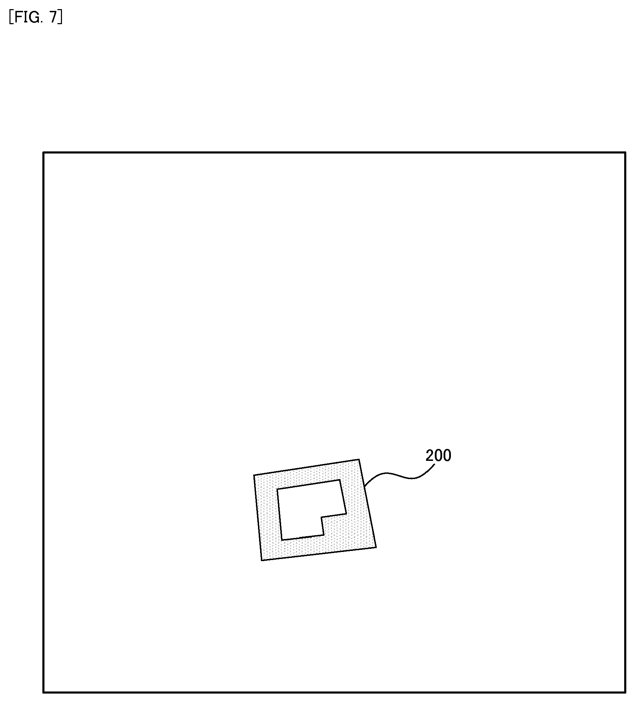

Hereinafter, with reference to FIG. 5 to FIG. 7, the detection of the translucent marker 200 using the divided image will be explained in detail. FIG. 5 is a plan view illustrating one example of a previous image. FIG. 6 is a plan view illustrating one example of the taken image. FIG. 7 is a plan view illustrating one example of the divided image.

In FIG. 5, it is assumed that an image in which an envelope 400 is placed on a desk 300 is taken as the previous image. Incidentally, the previous image is an image in which the translucent marker 200 is not provided, and is a previously taken image. The previous image is stored, for example, in a memory or the like provided for the apparatus.

In FIG. 6, it is assumed that the translucent marker 200 is disposed to be superimposed on the envelope 400 on the desk 300. In this case, the marker detection unit 120 performs processing for dividing the taken image as illustrated in FIG. 6 by the previous image as illustrated in FIG. 5. In other words, the marker detection unit 120 performs division processing using the previous image.

In FIG. 7, in the divided image as a result of the division processing, a portion in which the translucent marker 200 does not exist has a value of "1". In other words, all the portions which are in the same image have the same division result. In contrast, a portion in which the translucent marker 200 exists has an attenuated image. Thus, the division result is not "1". The divided image thus becomes an image in which there remains only the portion in which the translucent marker 200 exists, as illustrated. Therefore, the translucent marker 200 can be preferably detected.

Back in FIG. 4, if the translucent marker 200 is detected, a correction amount for removing the translucent marker 200 is calculated by the removal correction amount calculation unit 130 (step S03). The correction amount is calculated on the basis of the transmittance of the translucent marker 200. Specifically, an attenuation factor of the image due to the presence of the translucent marker 200 is obtained from the transmittance of the translucent marker 200, and the correction amount is calculated as a value for canceling the attenuation. In order to obtain the attenuation factor more accurately, spectral transmittance of the translucent marker 200 is desirably constant.

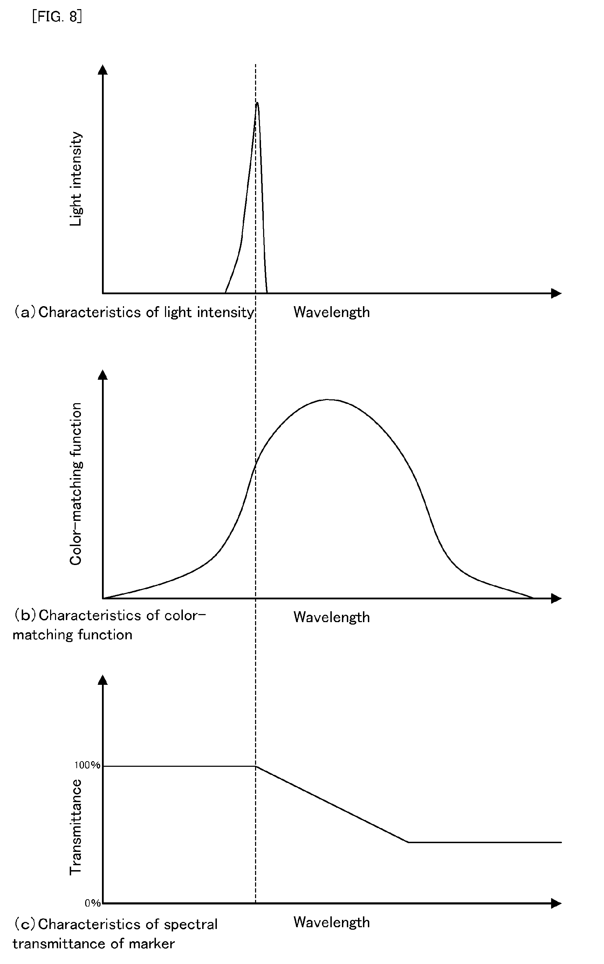

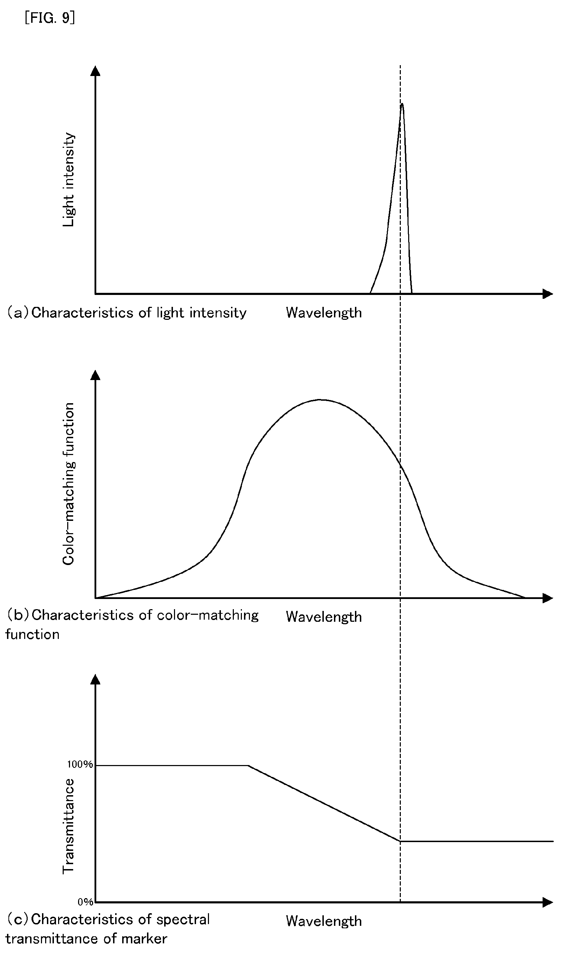

Hereinafter, with reference to FIGs. 8 and FIGs. 9, an explanation will be given to a problem in cases where the spectral transmittance of the translucent marker 200 is not constant. Each of FIGs. 8 and FIGs. 9 are graphs illustrating light intensity detected in the imaging, together with a color-matching function and spectral transmittance. Incidentally, the light intensity illustrated in FIGs. 8 and FIGs. 9 is light intensity in cases where the translucent marker 200 is not provided.

In FIGs. 8 and FIGs. 9, a RGB signal indicative of the image is obtained by multiplying the intensity of observed light (refer to (a) in the drawings) by the color-matching function (refer to (b) in the drawings) and integrating it. Thus, even lights having different wavelength characteristics, like the light illustrated in FIGs. 8 and the light illustrated FIGs. 9, can be detected as the identical light.

Now, it is assumed that the lights as described above are observed through a filter having characteristics of spectral transmittance (refer to (c) in the drawings). In other words, the observation is performed in a condition that the translucent marker 200 is provided. In this case, the light as illustrated in FIGs. 8 is treated as light having a spectral transmittance of 100%. Thus, the observed value hardly varies between a case of presentation and a case of absence of the translucent marker 200. On the other hand, the light as illustrated in FIGs. 9 has about half of the spectral transmittance. Thus, in the case of presence of the translucent marker 200, the value is about half in comparison with the case of absence of the translucent marker 200.

As described above, if the spectral transmittance is not constant, the attenuation factor of the RGB signal likely varies due to the wavelength characteristics of the observed light. In other words, if the wavelength characteristics of the observed light are unknown, an appropriate correction amount cannot be calculated unless the spectral transmittance is constant. That is, it is hard to appropriately remove the translucent marker. Thus, it is desirable that the spectral transmittance of the translucent marker 200 is constant.

Incidentally, such a problem can be solved by setting known wavelength characteristics of the observed light to be irradiated onto the translucent marker. For example, if a single-wavelength light source is used, the known wavelength characteristics of the observed light can be set.

Back in FIG. 4, if the correction amount is calculated, the correction amount is applied to the image by the removal correction applying unit 140 (step S04). In other words, the processing for dividing the translucent marker 200 is performed. By this, the translucent marker 200 is removed from the taken image. In particular, the correction amount is calculated on the basis of the transmittance of the translucent marker 200. Thus, a portion which is the background of the translucent marker 200 is not removed, and the image looks as if only the translucent marker 200 were removed.

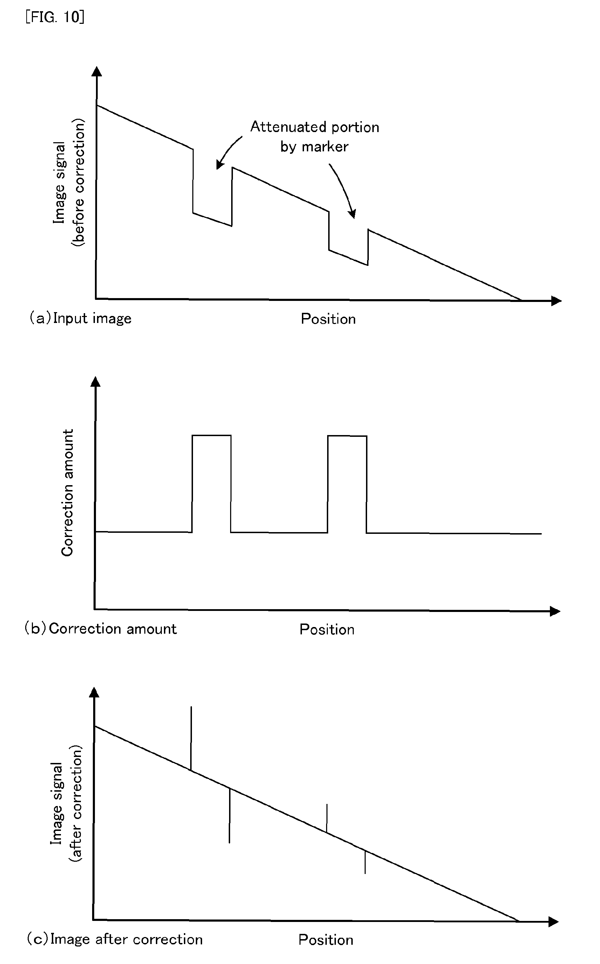

Incidentally, the removal correction applying unit 140 may be configured not only to simply apply the correction amount but also to perform correction processing for performing more proper division processing, or similar processing. Hereinafter, with reference to FIGs. 10, the correction performed in the division processing will be explained. FIGs. 10 are graphs illustrating an image signal before the correction and an image signal after the correction, together with the correction amount.

In FIGs. 10, for example, it is assumed that an image signal as illustrated in FIG. 10(a) is inputted. The image signal has a shape locally attenuated due to the presence of the translucent marker 200. In contrast, the correction amount is calculated as a value as illustrated in FIG. 10(b). In other words, a value for canceling the portion which is attenuated due to the presence of the translucent marker 200 (more specifically, a value which locally projects only in the attenuated portion) is calculated.

The application of the correction amount illustrated in FIG. 10(b) to the image signal illustrated in FIG. 10(a) results in an image signal as illustrated in FIG. 10(c). In other words, a linear image signal in which the attenuated portion is corrected is obtained. However, if the position of the attenuated portion in the image signal and the position of the projecting portion in the correction amount are not adjusted, local peaks may remain in some cases, as illustrated. Thus, the removal correction applying unit 140 performs the correction processing for finely adjusting the positions of the image signal and the correction amount. By this, the generation of the peaks as illustrated in the drawings can be reduced.

Moreover, even if the fine adjustment is performed, the peaks may be possibly generated in some cases. In this case, the peaks may be detected from the image signal after the correction, and processing for removing the peaks may be performed. Incidentally, it is enough to perform the processing for detecting the peak only in the contour portion of the marker.

As described above, if the position adjustment processing for the correction amount and the peak removing processing after the removal processing are performed, it is possible to remove the translucent marker 200, extremely preferably, in comparison with the case where the correction amount is simply applied.

Back in FIG. 4, if the processing for removing the translucent marker 200 ends, a CG image to be synthesized on the CG image generation unit 150 is generated (step S05). If the CG image is generated, the CG image is synthesized on the taken image on the CG image synthesis unit 160 (step S06). The CG image is generated, for example, in accordance with the type of the translucent marker 200, and is synthesized at a position at which the translucent marker 200 is detected. The image after the synthesis is outputted to the display unit 170 (step S07).

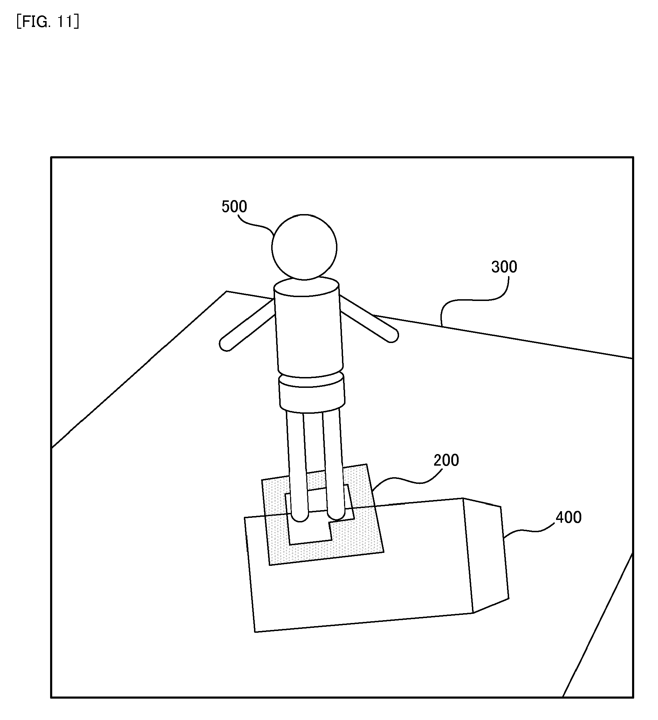

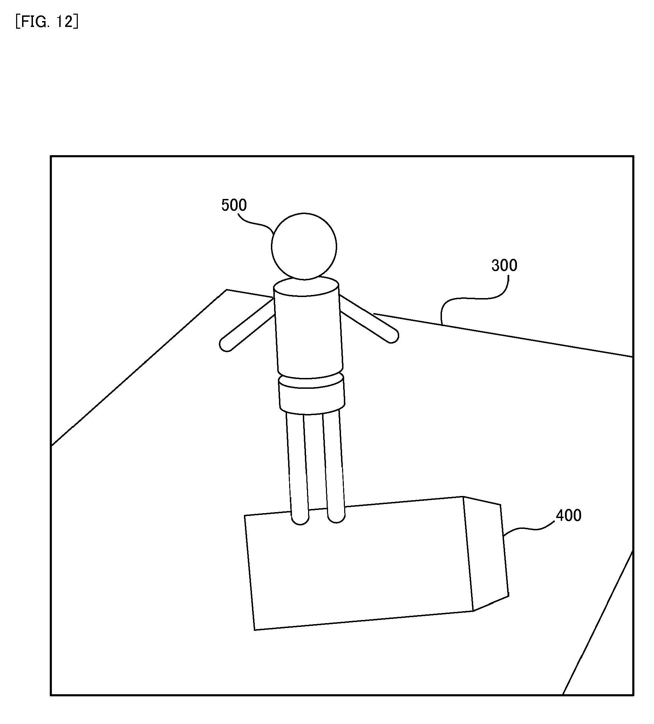

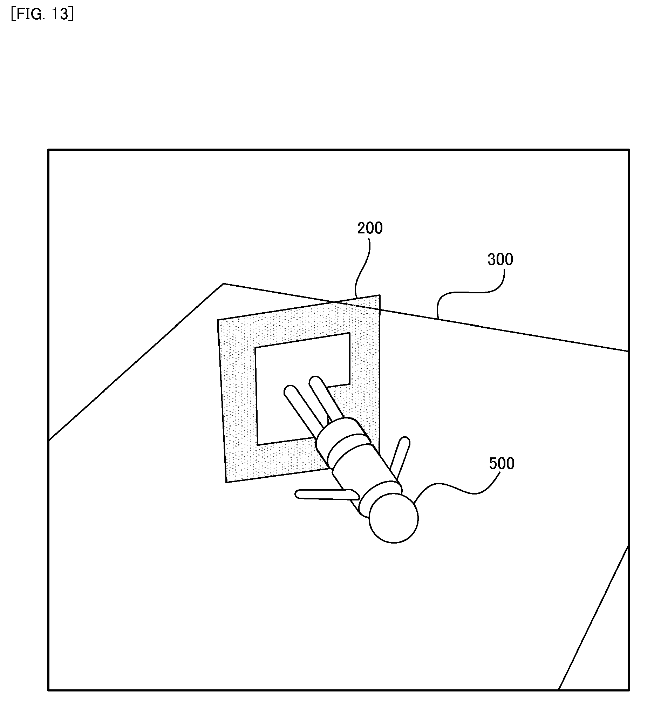

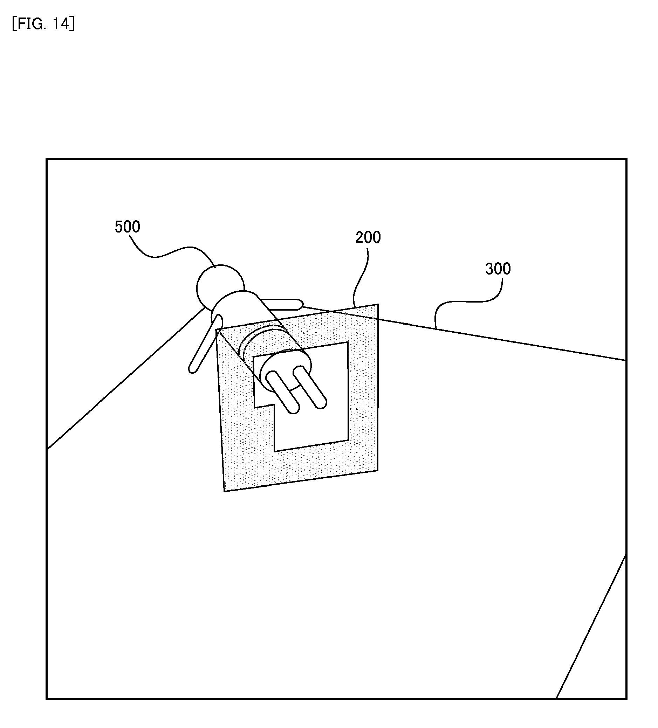

Hereinafter, refer to FIG. 11 to FIG. 14, the synthesis of the CG image will be specifically explained. FIG. 11 is a plan view illustrating the CG synthesized image together with the translucent marker 200. FIG. 12 is a plan view illustrating the CG synthesized image displayed. FIG. 13 is a plan view illustrating an image obtained by synthesizing the CG image on the front side of the translucent marker. FIG. 14 is a plan view illustrating an image obtained by synthesizing the CG image on the rear side of the translucent marker.

In FIG. 11, the CG image is synthesized, for example, to be superimposed on the translucent marker 200. Specifically, for example, a CG image of a human object 500 as illustrated is synthesized to stand on the translucent marker 200. Since the translucent marker 200 is removed, an image actually displayed on the display unit 170 is as illustrated in FIG. 12.

As illustrated in FIG. 12, even if the translucent marker 200 is removed, a background located on the rear side of the translucent marker 200 is not removed. As described above, according to the augmented reality apparatus in the example, it is possible to remove only the translucent marker 200, extremely naturally.

In FIG. 13 and FIG. 14, the translucent marker 200 can be seen through even from the rear side. Thus, if two sides of the translucent marker 200 can be distinguished, the CG image can be synthesized on the front side and the rear side, as illustrated. Incidentally, if the CG image is synthesized before the processing for removing the translucent marker 200, it is preferable to synthesize the CG image in view of the transmittance of the translucent marker 200, as illustrated in FIG. 14.

As explained above, according to the augmented reality apparatus in the example, it is possible to preferably remove the marker by using the translucent marker 200. Therefore, it is possible to realize extremely high-quality augmented reality.

The present invention is not limited to the aforementioned example, but various changes may be made, if desired, without departing from the essence or spirit of the invention which can be read from the claims and the entire specification. An augmented reality apparatus and a method of controlling the augmented reality apparatus, which involve such changes, are also intended to be within the technical scope of the present invention.

### Description of Reference Codes

| | |
|---|---|
| 110 | imaging unit |
| 120 | marker detection unit |
| 125 | marker ID database |
| 130 | removal correction amount calculation unit |
| 140 | removal correction applying unit |
| 150 | CG image generation unit |
| 155 | CG database |
| 160 | CG image synthesis unit |
| 170 | display unit |
| 200 | translucent marker |
| 300 | desk |
| 400 | envelope |
| 500 | human object |

## Claims

1. An augmented reality apparatus comprising:
an imaging device for taking an image;
a translucent marker having transparency;
a detecting device for detecting said translucent marker in the image;
a synthesizing device for performing synthesis processing on the basis of said translucent marker in the image; and
a removing device for removing said translucent marker from the image by using transmittance of said translucent marker.

2. The augmented reality apparatus according to claim 1, **characterized in that** said translucent marker has a shape which enables inversion of two sides to be distinguished.

3. The augmented reality apparatus according to claim 1, **characterized in that** said augmented reality apparatus further comprises a transmittance storing device for string the transmittance of said translucent marker.

4. The augmented reality apparatus according to claim 1, **characterized in that** said translucent marker has a reflection-reducing filter.

5. The augmented reality apparatus according to claim 1, **characterized in that** said translucent marker has constant spectral transmittance in a visible light region.

6. The augmented reality apparatus according to claim 1, **characterized in that** said removing device has:
a correction amount generating device for generating a correction amount for removing said translucent marker; and
an adjusting device for adjusting a position of an edge of the correction amount in accordance with a brightness edge of said translucent marker in the image.

7. The augmented reality apparatus according to claim 1, **characterized in that** said removing device has:
a peak detecting device for detecting a brightness peak in an area in which there is a brightness edge of said translucent marker in the image in which said translucent marker is removed; and
a peak correcting device for performing correction to reduce the brightness peak.

8. The augmented reality apparatus according to claim 1, **characterized in that** said detecting device detects said translucent marker on the basis of a brightness edge in the image.

9. The augmented reality apparatus according to claim 1, **characterized in that** said detecting device detects said translucent marker on the basis of a divided image obtained from a previous image which does not show said translucent marker and a taken image which shows said translucent marker.

10. The augmented reality apparatus according to claim 1, **characterized in that** said augmented reality apparatus further comprises at least one signal-wavelength light source.

11. The augmented reality apparatus according to claim 1, **characterized in that** said translucent marker has the transmittance which can be changed.

12. A method of controlling an augmented reality apparatus comprising a translucent marker having transparency, said method comprising:
an imaging process of taking an image;
a detecting process of detecting said translucent marker in the image;
a synthesizing process of performing synthesis processing on the basis of said translucent marker in the image; and
a removing process of removing said translucent marker from the image by using transmittance of said translucent marker.
